# EUROPEAN PATENT APPLICATION

(11) **EP 2 169 957 A1**
(43) Date of publication of application: **31.03.2010**
(21) Application number: 08290911.0
(22) Date of filing: 26.09.2008
(51) Int. Cl.: H04N 7/24

(54) **Method for transmitting video chains with minimal zapping time**

(71) Applicant: Alcatel Lucent, 75008 Paris (FR)
(72) Inventor: Alberi-Morel, Marie-Line, 94230 Cachan (FR); Leprovost, Yann, 91620 Nozay (FR)
(74) Representative: Sayettat, Julien Christian

(57) **Abstract**

Method for transmitting video chains from a content server to at least one receiver of a terminal of a user, each chain being encoded by using scalable codec technology for integrating a scalable codec base layer (b) and enhancement layers (e), wherein at least a part of each base layer (b) are multiplexed to be transmitted simultaneously to the receiver, the enhancement layers (e) and the eventual non multiplexed parts of the base layers (b) being multiplexed to be sent separately from the multiplexed base layers (b). The invention relates also to a content server for transmitting video chains and to a terminal for receiving multiplexed video chains from such content server.

## Description

The invention relates to a method for transmitting video chains from a content server to at least one receiver of a terminal of a user to reduce zapping time between video chains. The invention relates also to a content server for transmitting video chains and to a terminal for receiving multiplexed video chains from such content server.

Broadcast television is massively present in homes and the technologies integrated in television sets constantly increase their ease of use, notably as regards the quality of the video resolution and of the chain zapping.

Two modes currently exist to transmit broadcast TV contents brought by H.264 SVC (a type of scalable video coding, i.e. a video compression standard).

The first mode can be referred to as transmission in frequency domain. As regards that first mode, the video contents made of P chains are transmitted in parallel by means of multiplexing. L chains are multiplexed in the same channel, over N=P/L independent and adjacent channels. Such a system is notably used in the DVB-T system (or Digital Video Broadcasting-Terrestrial, the European-based consortium standard for the broadcast transmission of digital terrestrial television).

The contents transmitted in the same multiplex are thus received simultaneously and the receiver can recover quickly the new data of the new desired TV chain belonging to the same multiplex. However, this solution is suited to fixe receivers but it is mismatched to mobile receivers designed with less battery life.

Therefore, to save power of mobile handheld receivers a second mode of transmission has been developed. Indeed, the new mechanism of time-slicing has been implemented into DVB-H/SH system (Digital Video Broadcasting-Handheld/Digital Video Broadcasting Satellite services to Handheld). The contents are transmitted sequentially in periodic time-sliced bursts using a significantly higher instantaneous bit rate compared to the applicative bit rate required and there is long pause periods (inter burst period) in which the receiver is turned off.

The first transmission mode is an ideal solution to shorten the inter-channels zapping time. Indeed, when changing from a first to a second chain, the receiver recovers the I-frame of the second chain with a lower zapping delay if such chain belongs to the same multiplex as the first chain. The zapping delay is thus minimized only between the L chains belonging to the same transmission channel.

In the second mode, which can be referred to as transmission in time domain, when the user wishes to switch to another chain, the DVB-H/SH receiver has to wait to receive the next time-sliced burst containing the data of the desired chain. More precisely, the receiver must catch the first available I-frame to be able to display a sequence of pictures. In consequence, in this mode, waiting for the desired burst and the first available I-frame increases the zapping time.

One of the solutions to reduce zapping time between video chains is to insert a zapping chain in the bouquet of TV channels, such zapping chain comprising all of the TV chains contents but each being encoded with a reduced length (i.e. less pictures per second). When a user wishes to switch chains, he switches on the zapping chain, recovers the I-frame of the new desired chain with a lower delay and thus decreases the zapping time

But, considering that the contents in the zapping channel are encoded in a lower video quality, i.e. at a significantly reduced bit rate, this solution requires additive capacity.

Another of the limited solutions existing to date is the transmission of multiplexed chains simultaneously on independent and adjacent RF (Radio Frequency) channels with receivers operating with K RF tuners. Such receivers can receive simultaneously K multiplexes of chains and thus minimize the zapping time between (KxL) TV chains. To receive simultaneously the P TV chains, the receiver has to operate with P/L RF tuners. This solution doesn't require additive capacity but it can only be used for fixe or handled receivers with high capabilities.

The purpose of the invention is to resolve the problems of the prior art by proposing, in particular, a method for transmitting video chains from a content server to at least one receiver of a terminal of a user to reduce zapping time between video chains. This invention uses the scalability properties of the TV contents to reduce the zapping time for the two above presented modes of transmission.

For that purpose, and according to a first aspect, the invention relates to a method for transmitting video chains from a content server to at least one receiver of a terminal of a user, each chain being encoded by using scalable codec technology for integrating a scalable codec base layer and enhancement layers, wherein at least a part of each base layer are multiplexed to be transmitted simultaneously to the receiver, the enhancement layers and the eventual non multiplexed parts of the base layers being multiplexed to be sent separately from the multiplexed base layers.

According to a further aspect, the invention relates to a content server for transmitting video chains to at least one receiver of a terminal, said content server comprising means to encode said video chains by using scalable codec technology for integrating a scalable codec base layer and enhancement layers, said content server also comprising means to multiplex at least a part of each base layer to transmit them simultaneously to the receiver, and means to multiplex the enhancement layers and the eventual non multiplexed parts of the base layers to send them separately from the multiplexed base layers.

According to a further aspect, the invention relates to a terminal for receiving multiplexed video chains from such content server, said terminal comprising at least one receiver integrating a buffer enabling to decode firstly the multiplexed scalable codec base layer of the chain requested by the user of the terminal and then to decode the multiplexed enhancement layers for said chain.

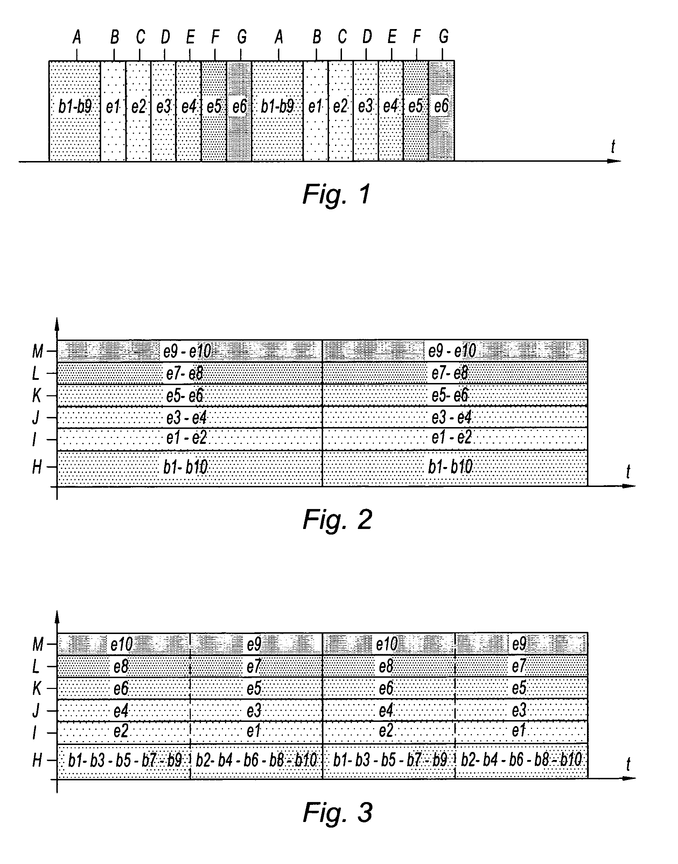

Other aspects and advantages will become apparent in the following description made with reference to the appended figures that represent the transmission of video chains,
- in time domain (figure 1),
- in frequency domain (figure 2), according to one embodiment in which the terminal is equipped with two receivers,
- in frequency domain (figure 3), according to a second embodiment in which the terminal is equipped with one receiver.

The invention here described concerns video chains which are broadcasted and are encoded by using scalable codec technology for integrating a scalable codec base layer b and enhancement layers e.

Indeed, scalable codecs (classically H264 SVC) encode video contents according to a layered system consisting of multiple layers of different visual importance: a base layer b and one or more enhancement layers e.

The base layer b provides video basic quality and/or video basic spatial and temporal resolution (i.e. video minimal quality). That layer can be decoded independently.

The enhancement layers e further increase the video quality and/or video spatial and temporal resolution (i.e. video maximal quality). Those layers can only be decoded together with the base layer b.

In the invention, each chain is encoded by using scalable codec technology for integrating a scalable codec base layer b and enhancement layers e.

The video chains are sent from a content server to a terminal (a television set). The content server comprises means to encode the video chains by using scalable codec technology for integrating a scalable codec base layer b and enhancement layers e. The content server also comprises means to multiplex at least a part of each base layer b to transmit them simultaneously to the receiver, and means to multiplex the enhancement layers e and the eventual non multiplexed parts of the base layers b to send them separately from the multiplexed base layers b.

The terminal comprises at least one receiver integrating a buffer enabling to decode firstly the multiplexed scalable codec base layer b of the chain requested by the user of the terminal and then to decode the multiplexed enhancement layers e for said chain.

For the transmission to the receiver, the video chains are multiplexed. In particular, the invention can be implemented in the existing broadcast/multicast and unicast transmission network (such as wireless network) operating in the TDMA-Single Carrier (Time Division Multiple Access) current systems wherein the data are sent:
- by being multiplexed in time domain, in the first multiple access scheme,
- by being multiplexed in frequency domain, in the last multiple access schemes.

Such TDMA-Single Carrier current systems are, for example, DVB-H/SH, TDMA-OFDM (Orthogonal Frequency Division Multiplexing) or OFDMA (Orthogonal Frequency-Division Multiple Access, such as WIMAX or 3LTE).

In addition, the invention could also be implemented in future broadcast/multicast and unicast transmission network generalizing the multiplexing to N dimension (time-frequency-space-code and others).

In the method according to the invention, each base layer b is multiplexed to be transmitted simultaneously to the receiver, or at least a part of each base layer b is multiplexed if that part is sufficient to provide a correct video quality for the chain.

The base layers here concerned are those for which the optimisation of zapping time is aimed. Indeed, for a bouquet of TV chains, some chains can be transmitted according to prior art if the reduction of zapping time is not required for them.

The enhancement layers e and eventual non multiplexed parts of the base layers b are multiplexed to be sent separately from the multiplexed base layers b.

Following this method, the implementation of the invention then varies depending on the transmission mode concerned.

Indeed, the transmission of video chains can be made according to two different modes, i.e. transmission in frequency domain or in time domain, notably in relation with respectively a fixe or a mobile terminal.

In a time domain transmission, the video chains are transmitted sequentially in periodic time-sliced bursts A-G to the terminal. In DVB-H/SH, the time period between two bursts A-G is constant and is comprised between one and a dozen of seconds.

Figure 1 represents an implementation in that first transmission mode.

In relation with figure 1, two multiplex service periods are represented, each multiplex comprising seven bursts A-G.

The burst A comprises the base layers b1-b9 corresponding to all of the chains, i.e. in the present example nine chains.

The other bursts B-G comprise the enhancement layers e1-e6 corresponding to the chains which need such layers. Indeed, some chains do not require enhancement layers e because their video quality is high with their base layer b only. In the present example, chains n° 7 to n° 10 do not have corresponding enhancement layers e.

The base layers b1-b9 are multiplexed in a same burst A and the enhancement layers e1-e6 are multiplexed in bursts B-G separate from the burst A of the multiplexed base layers b1-b9.

That way, the off-time duration is maximized as the receiver only has to be active during two bursts, the first burst A containing the base layers b1-b9 and the second burst C, for example, containing the targeted enhancement layers e2.

For example, if the user wishes to watch chain n° 4, the terminal's receiver will decode the first burst A, comprising the base layer b4, and the burst E which comprises the enhancement layers e4 for that chain. When further in time ("t" in figures) he switches to chain n° 5, he already has the base layer b5 for that chain stored in the receiver of his terminal.

In particular, the base layer b5 of chain n° 5 is only decoded when the user requests to switch to that chain. And, when the base layer b5 of chain n° 5 is decoded by the receiver, the user can immediately display its content with basic quality: the chain is viewed (in such basic quality) during the zapping phase. The enhancement layers e5 of chain n° 5 are then recovered in the next burst F.

In the second transmission mode, i.e. frequency domain, the video chains are transmitted in independent and adjacent channels H-M. The channels are RF (radiofrequency) channels.

The base layers b of the chains are multiplexed in a same RF channel H. The enhancement layers e are multiplexed in channels I-M separate from the channel H of the base layers b.

Figure 2 represents an implementation in that second transmission mode.

In relation with figure 2, two multiplex service periods are represented. Each multiplex comprises six channels H-M to transmit ten chains.

The channel H comprises the base layers b1-b10 corresponding to all of the chains, i.e. in the present example ten chains.

The other channels I-M comprise the enhancement layers e1-e10, each channel comprising the enhancement layers corresponding to two chains, i.e.:
- channel I comprises enhancement layers e1-e2,
- channel J comprises enhancement layers e3-e4,
- channel K comprises enhancement layers e5-e6,
- channel L comprises enhancement layers e7-e8,
- channel M comprises enhancement layers e9-e10.

A terminal equipped with two receivers at least receives the channel H comprising the base layers b1-b10 and decodes, for example, the base layer b1 of the chain 1 that the user wishes to watch. The second receiver receives the channel I comprising the enhancement layers e1-e2. The second receiver then decodes the relevant enhancement layers e1 within the channel I.

In another embodiment, the terminal is equipped with a single receiver.

In that embodiment, the risk is overlapping between two channels H-M due to a significant amount of layers to decode in a single receiver.

A proposed solution is to separate layers within the channels.

In relation with figure 3, two multiplex service periods are represented, each multiplex comprising six channels H-M to transmit ten chains.

In order to avoid overlapping between two channels, the base layers b and enhancement layers e are shifted in time.

The channel H comprises the base layers b1-b10, said base layers being separated in two groups within their channel:
- the base layers b1, b3, b5, b7 and b9 corresponding to half of the chains, i.e. in the present example five chains out of ten,
- the base layers b2, b4, b6, b8 and b10 corresponding to the second half of the chains.

The other channels I-M comprise the enhancement layers e1-e10. Each channel comprises the enhancement layers corresponding to two chains but being separated in their respective channel, i.e.:
- channel I comprises enhancement layers e1 separate from e2,
- channel J comprises enhancement layers e3 separate from e4,
- channel K comprises enhancement layers e5 separate from e6,
- channel L comprises enhancement layers e7 separate from e8,
- channel M comprises enhancement layers e9 separate from e10.

Then, for example, the receiver decodes:
- in the channel H the base layer b1 comprising the chain that he wishes to watch, and
- in crossed position, the adequate enhancement layers e1 in the channel I.

## Claims

1. Method for transmitting video chains from a content server to at least one receiver of a terminal of a user, each chain being encoded by using scalable codec technology for integrating a scalable codec base layer (b) and enhancement layers (e), wherein at least a part of each base layer (b) are multiplexed to be transmitted simultaneously to the receiver, the enhancement layers (e) and the eventual non multiplexed parts of the base layers (b) being multiplexed to be sent separately from the multiplexed base layers (b).

2. Method according to claim 1, **characterized in that** the multiplexed base layer (b) provides a correct video quality for the chain, the multiplexed enhancement layers (e) increasing the video quality and/or the spatial and temporal resolution of the chain.

3. Method according to claims 1 or 2, **characterized in that** the video chains are transmitted sequentially in periodic time-sliced bursts (A-G), the base layers (b) being multiplexed in a same burst (A).

4. Method according to claim 3, **characterized in that** the enhancement layers (e) are multiplexed in bursts (B-G) separate from the burst (A) of the multiplexed base layers (e).

5. Method according to claim 4, **characterized in that** all of the enhancement layers (e) corresponding to a chain are multiplexed in a same burst (B-G), said burst being distinct from the bursts comprising the enhancement layers (e) which correspond to another chain.

6. Method according to any of claims 1 to 5, **characterized in that** the video chains are transmitted in independent and adjacent channels (H-M), the base layers (b) being multiplexed in a same channel (H).

7. Method according to claim 6, **characterized in that** the enhancement layers (e) are multiplexed in channels (I-M) separate from the channel (H) of the base layers (b).

8. Method according to claim 7, **characterized in that** the base layers (b) and enhancement layers (e) are shifted in time to avoid overlapping over two channels (H-M) within a single receiver of the terminal.

9. Content server for transmitting video chains to at least one receiver of a terminal, said content server comprising means to encode said video chains by using scalable codec technology for integrating a scalable codec base layer (b) and enhancement layers (e), said content server also comprising means to multiplex at least a part of each base layer (b) to transmit them simultaneously to the receiver, and means to multiplex the enhancement layers (e) and the eventual non multiplexed parts of the base layers (b) to send them separately from the multiplexed base layers (b).

10. Terminal for receiving multiplexed video chains from a content server according to claim 9, said terminal comprising at least one receiver integrating a buffer enabling to decode firstly the multiplexed scalable codec base layer (b) of the chain requested by the user of the terminal and then to decode the multiplexed enhancement layers (e) for said chain.
